(19) Europäisches Patentamt European Patent Office Office européen des brevets

(11) **EP 4 641 964 A1**

(12) **EUROPEAN PATENT APPLICATION**

(43) Date of publication:
29.10.2025 Bulletin 2025/44

(21) Application number: 25170188.4

(22) Date of filing: 11.04.2025

(51) International Patent Classification (IPC):
*H04L 5/00* (2006.01)

(52) Cooperative Patent Classification (CPC):
H04L 5/0094; H04L 5/0044; H04L 5/0048

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 26.04.2024 GB 202405909

(71) Applicant: Nokia Technologies Oy
02610 Espoo (FI)

(72) Inventor: LIYANAARACHCHI, Sahan Damith
33880 Lempäälä (FI)

(74) Representative: Script Intellectual Property LLP
Suite J, Anchor House
School Close
Chandlers Ford
Eastleigh, Hampshire SO53 4DY (GB)

(54) **METHOD, APPARATUS AND COMPUTER PROGRAM**

(57) There is provided a user equipment comprising at least one processor (301) and at least one memory (302) storing instructions that, when executed by the at least one processor, cause the user equipment at least to: send, to an access node, a message for requesting allocation of one or more physical uplink shared channel resources; receive, from the access node, based on the sent message, information indicating resources allocated for one or more physical uplink shared channel transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and send, to the access node, based on the information indicating the transmission power for non-muted resources and/or a transmission power for the resources allocated for the one or more physical uplink shared channel transmissions, one or more physical uplink shared channel transmissions using the resources allocated for the one or more physical uplink shared channel transmissions and one or more uplink reference signal transmissions using non-muted resources allocated for uplink reference signal transmission.

Fig. 8

**Description**

TECHNICAL FIELD

Various example embodiments of this disclosure relate to a method, apparatus, system and computer program and in particular but not exclusively to user equipment localization and sensing.

BACKGROUND

A communication network can be seen as a facility that enables communications between two or more communication devices or provides communication devices access to a data network. A mobile or wireless communication network is one example of a communication network. A communication device may be provided with a service by an application server.

Such communication networks operate in accordance with standards such as those provided by 3GPP (Third Generation Partnership Project) or ETSI (European Telecommunications Standards Institute). Examples of standards provided by 3GPP are the so-called 3GPP standards for cellular technology generations, such as 3GPP standards for 4G technology and 3GPP standards for 5G technology.

SUMMARY

Some example embodiments of this disclosure will be described with respect to certain aspects. These aspects are not intended to indicate key or essential features of the various example embodiments of this disclosure, nor are they intended to be used to limit the scope of thereof. Other features, aspects, and elements will be apparent to a person skilled in the art in view of this disclosure. For example, it should be appreciated that further aspects may be provided by the combination of any two or more of the various aspects described below.

According to an aspect, there is provided an access node comprising means for: receiving, from a user equipment, a message for requesting allocation of one or more physical uplink shared channel (PUSCH) resources; based on the received message, sending, to the user equipment, information indicating resources allocated for one or more PUSCH transmissions; based on the received message, sending, to a first network function, information indicating resources that are allocated for one or more PUSCH transmissions; receiving, from the first network function, based on the information indicating the resources that are allocated for the one or more PUSCH transmissions, information indicating that a subset of a plurality of resources allocated for uplink reference signal transmission are to be muted; sending, to a user equipment, the information indicating that the subset of a plurality of resources allocated for uplink reference signal transmission are to be muted; and receiving, from the user equipment, the one or more PUSCH transmissions and one or more uplink reference signal transmissions.

The resources that are allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of resources allocated for one or more PUSCH transmissions.

Receiving the one or more uplink reference signals may comprise receiving the one or more uplink reference signals using non-muted resources of the plurality of resources allocated for uplink reference signal transmission.

The information indicating that the subset of the plurality of resources allocated for uplink reference signal transmission are to be muted may further comprise information indicating the non-muted resources of the plurality of resources allocated for uplink reference signal transmission.

The information indicating the non-muted resources of the plurality of resources allocated for uplink reference signal transmission may further comprise information indicating a transmission power for the non-muted resources and/or a transmission power for the resources allocated for the one or more PUSCH transmissions.

An average of the transmission power of the non-muted resources may be higher than an average of the transmission power of the resources allocated for uplink reference signal transmission prior to muting the subset; and/or an average of the transmission power of the resources allocated for PUSCH transmission after muting the subset of the plurality of resources allocated for uplink reference signal transmission may be higher than an average of the transmission power of the resources allocated for PUSCH transmission prior to muting the subset of the plurality of resources allocated for uplink reference signal transmission.

The means may be further for: determining, based on the received one or more PUSCH transmissions and the one or more uplink reference signal transmissions, location information associated with a user equipment.

The first network function may comprise a location management function. The uplink reference signal may comprise a sounding reference signal.

The message for requesting allocation of the one or more PUSCH resources may comprise one of: a scheduling request; a buffer status report; or radio resource control signalling.

According to an aspect there is provided an apparatus comprising means for providing a first network function configured to perform: receiving, from an access node, information indicating resources allocated for the one or more PUSCH transmissions; and sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

The means may be further for: determining the subset of the plurality of resources allocated for uplink reference signal transmission that are to be muted based at least in part on the information indicating the plurality of resources allocated for the one or more PUSCH transmissions.

The resources that are allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of resources allocated for one or more PUSCH transmissions.

The information indicating that the subset of the plurality of resources allocated for uplink reference signal transmission are to be muted may further comprise information indicating non-muted resources of the plurality of resources allocated for uplink reference signal transmission.

The information indicating the non-muted resources of the plurality of resources allocated for uplink reference signal transmission may further comprise information indicating a transmission power for the non-muted resources and/or a transmission power for the resources allocated for the one or more PUSCH transmissions.

The first network function may comprise a location management function. The uplink reference signal may comprise a sounding reference signal.

According to an aspect there is provided a user equipment comprising means for: sending, to an access node, a message for requesting allocation of one or more PUSCH resources; receiving, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

The resources allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of the resources allocated for the one or more PUSCH transmissions.

The information indicating that the subset of the plurality of resources allocated for uplink reference signal transmission are to be muted may further comprise information indicating non-muted resources of the plurality of resources allocated for uplink reference signal transmission.

An average of the transmission power of the non-muted resources may be higher than an average of the transmission power of the resources allocated for uplink reference signal transmission prior to muting the subset; and/or an average of the transmission power of the resources allocated for PUSCH transmission after muting the subset of the plurality of resources allocated for uplink reference signal transmission may be higher than an average of the transmission power of the resources allocated for PUSCH transmission prior to muting the subset of the plurality of resources allocated for uplink reference signal transmission.

The message for requesting allocation of the one or more PUSCH resources may comprise one of: a scheduling request; a buffer status report; or radio resource control signalling.

According to an aspect, there is provided an access node comprising at least one processor and at least one memory storing instructions that, when executed by the at least one processor, cause the access node at least to: receive, from a user equipment, a message for requesting allocation of one or more physical uplink shared channel (PUSCH) resources; based on the received message, send, to the user equipment, information indicating resources allocated for one or more PUSCH transmissions; based on the received message, send, to a first network function, information indicating resources that are allocated for one or more PUSCH transmissions; receive, from the first network function, based on the information indicating the resources that are allocated for the one or more PUSCH transmissions, information indicating that a subset of a plurality of resources allocated for uplink reference signal transmission are to be muted; send, to a user equipment, the information indicating that the subset of a plurality of resources allocated for uplink reference signal transmission are to be muted; and receive, from the user equipment, the one or more PUSCH transmissions and one or more uplink reference signal transmissions.

The resources that are allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of resources allocated for one or more PUSCH transmissions.

The at least one processor may be configured to cause the access node to receive the one or more uplink reference signals using non-muted resources of the plurality of resources allocated for uplink reference signal transmission.

The information indicating that the subset of the plurality of resources allocated for uplink reference signal transmission are to be muted may further comprise information indicating the non-muted resources of the plurality of resources allocated for uplink reference signal transmission.

The information indicating the non-muted resources of the plurality of resources allocated for uplink reference signal transmission may further comprise information indicating a transmission power for the non-muted resources and/or a transmission power for the resources allocated for the one or more PUSCH transmissions.

An average of the transmission power of the non-muted resources may be higher than an average of the transmission power of the resources allocated for uplink reference signal transmission prior to muting the subset; and/or an average of the transmission power of the resources allocated for PUSCH transmission after muting the subset of the plurality of resources allocated for uplink reference signal transmission may be higher than an average of the transmission power of the resources allocated for PUSCH transmission prior to muting the subset of the plurality of resources allocated for uplink reference signal transmission.

The at least one processor may be configured to cause the access node to: determine, based on the received one or more PUSCH transmissions and the one or more uplink reference signal transmissions, location information associated with a user equipment.

The first network function may comprise a location management function. The uplink reference signal may comprise a sounding reference signal.

The message for requesting allocation of the one or more PUSCH resources may comprise one of: a scheduling request; a buffer status report; or radio resource control signalling.

According to an aspect, there is provided an apparatus for providing a first network function, the apparatus comprising at least one processor and at least one memory storing instructions that, when executed by the at least one processor, cause the apparatus at least to: receive, from an access node, information indicating resources allocated for the one or more PUSCH transmissions; and send, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

The at least one processor may be configured to cause the apparatus to: determine the subset of the plurality of resources allocated for uplink reference signal transmission that are to be muted based at least in part on the information indicating the plurality of resources allocated for the one or more PUSCH transmissions.

The resources that are allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of resources allocated for one or more PUSCH transmissions.

The information indicating that the subset of the plurality of resources allocated for uplink reference signal transmission are to be muted may further comprise information indicating non-muted resources of the plurality of resources allocated for uplink reference signal transmission.

The information indicating the non-muted resources of the plurality of resources allocated for uplink reference signal transmission may further comprise information indicating a transmission power for the non-muted resources and/or a transmission power for the resources allocated for the one or more PUSCH transmissions.

The first network function may comprise a location management function. The uplink reference signal may comprise a sounding reference signal.

According to an aspect, there is provided a user equipment comprising at least one processor and at least one memory storing instructions that, when executed by the at least one processor, cause the user equipment at least to: send, to an access node, a message for requesting allocation of one or more PUSCH resources; receive, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and send, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

The resources allocated for the one or more PUSCH transmissions and the resources allocated for uplink reference signal transmission may comprise a plurality of resource elements, wherein each resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of the resources allocated for the one or more PUSCH transmissions.

The information indicating that the subset of the plurality of resources allocated for uplink reference signal transmission are to be muted may further comprise information indicating non-muted resources of the plurality of resources allocated for uplink reference signal transmission.

An average of the transmission power of the non-muted resources may be higher than an average of the transmission power of the resources allocated for uplink reference signal transmission prior to muting the subset; and/or an average of the transmission power of the resources allocated for PUSCH transmission after muting the subset of the plurality of resources allocated for uplink reference signal transmission may be higher than an average of the transmission power of the resources allocated for PUSCH transmission prior to muting the subset of the plurality of resources allocated for uplink reference signal transmission.

The message for requesting allocation of the one or more PUSCH resources may comprise one of: a scheduling request; a buffer status report; or radio resource control signalling

According to an aspect, there is provided a method performed by an access node, the method comprising: receiving, from a user equipment, a message for requesting allocation of one or more physical uplink shared channel (PUSCH) resources; based on the received message, sending, to the user equipment, information indicating resources allocated for one or more PUSCH transmissions; based on the received message, sending, to a first network function, information indicating resources that are allocated for one or more PUSCH transmissions; receiving, from the first network function, based on the information indicating the resources that are allocated for the one or more PUSCH transmissions, information indicating that a subset of a plurality of resources allocated for uplink reference signal transmission are to be muted; sending, to a user equipment, the information indicating that the subset of a plurality of resources allocated for uplink reference signal transmission are to be muted; and receiving, from the user equipment, the one or more PUSCH transmissions and one or more uplink reference signal transmissions.

According to an aspect there is provided a method performed by a first network function, the method comprising: receiving, from an access node, information indicating resources allocated for the one or more PUSCH transmissions; and sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

According to an aspect there is provided a method performed by a user equipment, the method comprising: sending, to an access node, a message for requesting allocation of one or more PUSCH resources; receiving, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

According to an aspect, there is provided a computer readable medium comprising instructions which, when executed by an access node, cause the access node to perform at least the following: receiving, from a user equipment, a message for requesting allocation of one or more physical uplink shared channel (PUSCH) resources; based on the received message, sending, to the user equipment, information indicating resources allocated for one or more PUSCH transmissions; based on the received message, sending, to a first network function, information indicating resources that are allocated for one or more PUSCH transmissions; receiving, from the first network function, based on the information indicating the resources that are allocated for the one or more PUSCH transmissions, information indicating that a subset of a plurality of resources allocated for uplink reference signal transmission are to be muted; sending, to a user equipment, the information indicating that the subset of a plurality of resources allocated for uplink reference signal transmission are to be muted; and receiving, from the user equipment, the one or more PUSCH transmissions and one or more uplink reference signal transmissions.

According to an aspect, there is provided a computer readable medium comprising instructions which, when executed by an apparatus for a first network function, cause the apparatus to perform at least the following: receiving, from an access node, information indicating resources allocated for the one or more PUSCH transmissions; and sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

According to an aspect, there is provided a computer readable medium comprising instructions which, when executed by a user equipment, cause the user equipment to perform at least the following: sending, to an access node, a message for requesting allocation of one or more PUSCH resources; receiving, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

According to an aspect, there is provided a non-transitory computer readable medium comprising program instructions that, when executed by an apparatus, cause the apparatus to perform at least the method according to any of the preceding aspects.

In the above, many different aspects have been described. As previously noted, it should be appreciated that further aspects may be provided by the combination of any two or more of the aspects described above. Other features, aspects, and elements will become apparent in view of the following.

DESCRIPTION OF FIGURES

Some example embodiments will now be described, by way of non-limiting and illustrative example only, with reference to the accompanying Figures (FIGs) in which:

FIG. 1 shows a representation of a 5th generation communication system;
FIG. 2 shows a representation of an apparatus for the communication system of FIG. 1 according to some example embodiments;
FIG. 3 shows a representation of an apparatus according to some example embodiments;
FIG. 4 illustrates the dependence of range resolution and velocity resolution on channel bandwidth, carrier frequency and time duration;
FIG.s 5a-c show methods according to some examples;
FIG. 6 shows an example SRS resource block;
FIG. 7 shows an example resource grid;
FIG. 8 shows a method according to some examples; and
FIG. 9 shows a schematic representation of an apparatus according to some examples.

DETAILED DESCRIPTION

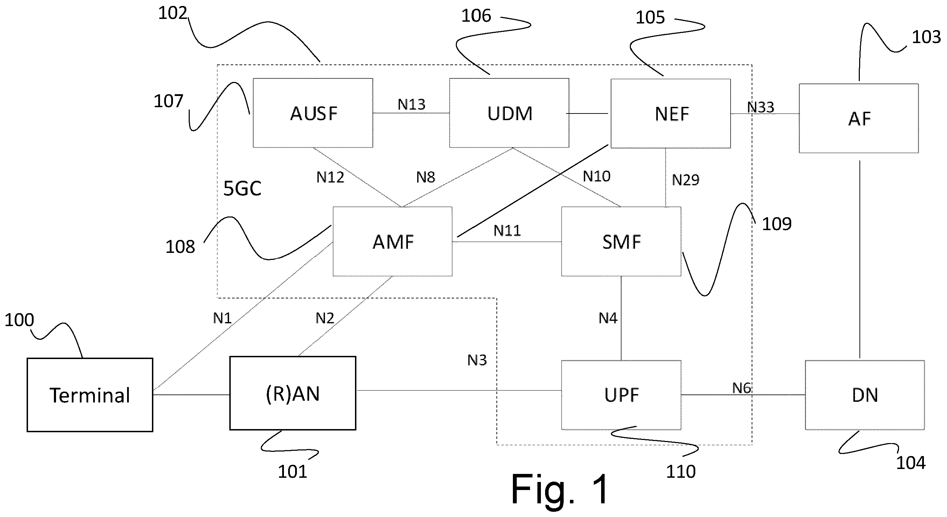

In the following various example embodiments are explained with reference to communication devices capable of communication with a communication system. Before explaining in detail the various example embodiments of this disclosure, a 5th generation communication system (5GS), an access network and a core network (5GC) thereof, and communication devices are briefly explained with reference to FIG. 1, 2 and 3.

FIG. 1 shows a schematic representation of a 5G communication system (5GS). The 5GS may comprise a user equipment (UE) or Terminal 100, an access network, such as a 5G radio access network (5G-RAN) 101 or next generation radio access network (NG-RAN), a 5G core network 102, and one or more application functions 103. An application function 103 may be deployed in the 5GS as trusted application function or may be deployed or host on one or more application servers of the data network (DN) 104. Such application functions are untrusted application functions. The 5GS connects the UE to a data network the access network and the 5GC 102 (e.g., a UPF of the 5GC).

The 5G-RAN 101 may comprise one or more radio access nodes, such as a gNodeB (gNB). A gNB may include one or more gNodeB (gNB) distributed units (DUs) connected to one or more gNodeB (gNB) centralized units (CUs).

The 5GC may comprise the following network functions: Network Slice Selection Function (NSSF); Network Exposure Function (NEF) 105; Network Repository Function (NRF); Policy Control Function (PCF); Unified Data Management (UDM) 106; Application Function (AF) 103; Authentication Server Function (AUSF) 107; an Access and Mobility Management Function (AMF) 108; Session Management Function (SMF) 109; and a user plane function (UPF) 110.

FIG. 1 also shows the various interfaces (N1, N2 etc.) that may be implemented between the various elements of the system.

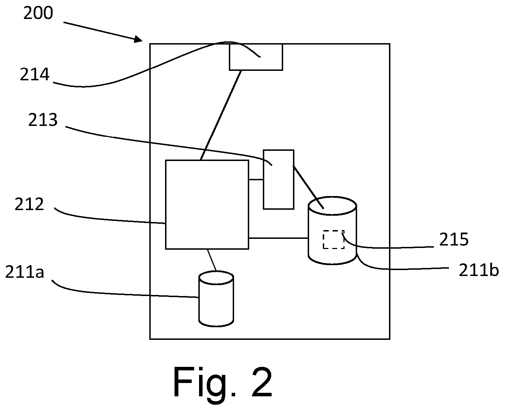

FIG. 2 illustrates an example of a control apparatus 200 for controlling a function of the access network (e.g., a 5G-RAN or the NG-RAN illustrated in FIG. 1) of FIG. 1. The control apparatus 200 may comprise at least one random access memory (RAM) 211a, at least on read only memory (ROM) 211b, at least one processor 212, 213 and a network interface 214. The at least one processor 212, 213 may be coupled to the RAM 211a and the ROM 211b. The at least one processor 212, 213 may be configured to execute an appropriate software code 215.

Execution of the software code 215 may, for example, may cause the apparatus to perform operations for controlling a function of the access network. The software code 215 may be stored in the ROM 211b. The control apparatus 200 may be interconnected with another control apparatus 200 for controlling another function of the 5G-RAN or the NG-RAN. In some embodiments, each function of the 5G-RAN or the NG-RAN is deployed or hosted on a control apparatus 200. In alternative embodiments, two or more functions of the 5G-RAN or the NG-RAN may share a control apparatus.

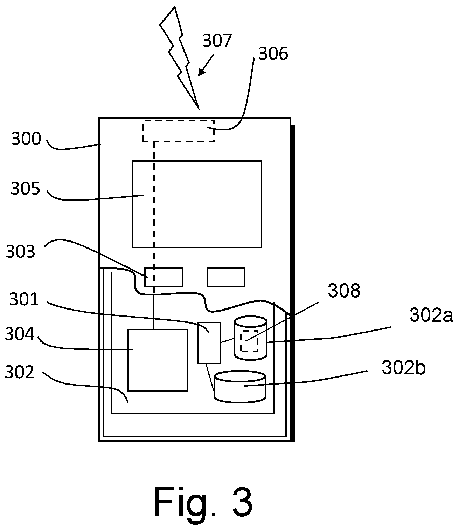

FIG. 3 illustrates an example of a communication device 300, such as the UE of FIG. 1. The communication device 300 may be provided by any device capable of sending and receiving radio signals. Non-limiting examples of a communication device 300 comprise a user equipment, a mobile station (MS) or mobile device, such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 300 may comprise a transceiver for transmitting and/or receiving, for example, wireless signals carrying communications, for example radio signals. The communications may be one or more of voice, electronic mail (email), text messages, multimedia data, machine data and so on.

The communication device 300 may receive wireless signals (e.g., radio signals) over an air or radio interface 307 via appropriate apparatus for receiving and may transmit wireless signals via appropriate apparatus for transmitting radio signals. In FIG. 3 transceiver is designated schematically by block 306. The transceiver 306 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 300 may be provided with at least one processor 301, at least one memory ROM 302a, at least one RAM 302b and other possible components 303 for use in software and hardware aided execution of tasks it is designed to perform, including control of access to and communications with access networks (e.g., the 5G-RAN or NG-RAN illustrated in FIG. 1) and other communication devices. The at least one processor 301 is coupled to the RAM 302b and the ROM 302a. The at least one processor 301 may be configured to execute an appropriate software code 308. The software code 308 may, for example, allow to perform one or more operations of the communication device. The software code 308 may be stored in the ROM 302a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 304.

The communication device 300 may optionally have a user interface, such as keypad 305, a touch sensitive screen or a pad, combinations thereof or the like. Optionally one or more of a display, a speaker and a microphone may be provided depending on the type of communication device.

In some communications networks (e.g., 5G or 6G networks), wireless sensing may be implemented to acquire information about a remote object and its characteristics without physically contacting the remote object. Perception data of the object and its surrounding can be utilized for various analysis, gaining information about the object. In some examples, sensing capabilities may be provided by the same network infrastructure as that used for communication (e.g., 5G NR), and the sensing information may be inferred from radio signals, RF-based and/or non-RF based sensors. In general, sensing may involve scenarios of communication-assisted sensing in which communication systems provide sensing services or sensing-assisted communication in which sensing information related to the communication channel or environment is used to improve the communication service.

Sensing information can assist in tasks such as but not limited to radio resource management tasks, interference mitigation, beam management, mobility, etc. Sensing use cases may also require that object sensing performance and identity (e.g., UE ID) can be identified for further actions via communications, for example Detect and Avoid (DAA), selecting routes for UAV, etc.

In some example sensing use cases, sensing may include finding a location of an object (e.g., a UE), and therefore may enable positioning and sensing to be operated in a seamless manner.

In some examples, positioning and sensing can be based on one or more uplink (UL) reference signals transmitted by the UE. The one or more UL reference signals may comprise one or more sounding reference signals (SRS). The one or more UL reference signals may be received at the access node directly from the UE or may be reflected from other objects in the environment (e.g., other UEs, vehicles, buildings etc.) before being received at the access node.

Upon reception, the access node (e.g., gNB) may use the received signal samples of the UL reference signal together with the transmitted signal samples of the UL reference signal (which are assumed to be known and replicated by the access node), to localize the UE, or sense the other objects in the environment. Typically, by processing the transmitted and received signal samples, the access node can estimate information such as the range and velocity of the UE and/or the other objects.

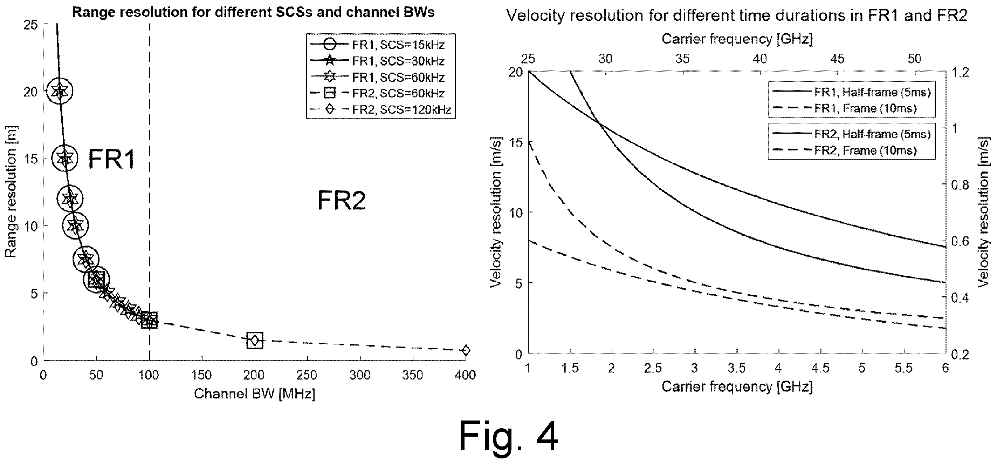

In some examples, the range and velocity resolution of the information estimated by the access node may be dependent on the channel bandwidth and carrier frequency of the UL reference signals. More specifically, as shown in FIG. 4, the range resolution for different subcarrier spacings (SCSs) may be dependent on the channel bandwidth of the UL reference signal, and the velocity resolution may be dependent on the carrier frequency of the UL reference signal and the total time duration of the signal. As can be seen from FIG. 4, in general the lower the channel bandwidth and the carrier frequency and the shorter the time duration, the lower the resolution of the range and velocity.

As mentioned previously, in order for the access node to perform UE localization and sensing, the access node may need to know the content of the UL reference signal as transmitted. Therefore other UL signals, such as physical uplink shared channel (PUSCH) data may not on its own be suitable for UE localization and sensing, since the content of PUSCH is initially unknown at the access node, and PUSCH data typically occupies only a small portion of the bandwidth and time durations (due to the "bursty" nature of PUSCH) which results in lower range and velocity resolution.

However if other UL signals, such as PUSCH, could be utilized together with the UL reference signals (e.g., SRS) for UE localization and sensing, the performance may be improved. Some examples may provide methods for utilizing PUSCH and UL reference signals for UE localization and sensing. As will be explained in the following examples, some examples may provide additional flexibility in UE localization and sensing. Some examples may enable energy saving and/or improved UE localization and sensing performance.

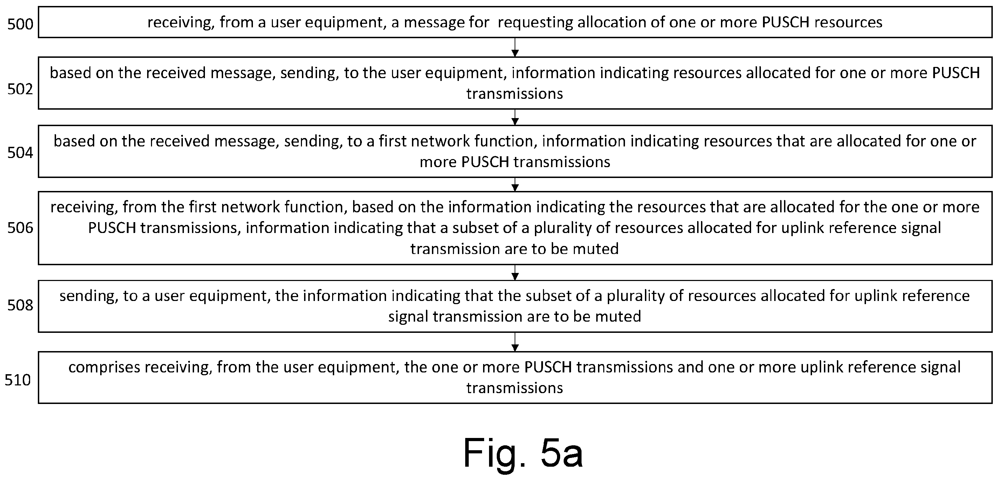

Reference is made to FIG. 5a, which shows a method performed by an access node according to some examples.

At 500, the method comprises receiving, from a user equipment, a message for requesting allocation of one or more physical uplink shared channel (PUSCH) resources. At 502, the method comprises, based on the received message, sending, to the user equipment, information indicating resources allocated for one or more PUSCH transmissions. At 504 the method comprises, based on the received message, sending, to a first network function, information indicating resources that are allocated for one or more PUSCH transmissions. At 506 the method comprises receiving, from the first network function, based on the information indicating the resources that are allocated for the one or more PUSCH transmissions, information indicating that a subset of a plurality of resources allocated for uplink reference signal transmission are to be muted. At 508 the method comprises sending, to a user equipment, the information indicating that the subset of a plurality of resources allocated for uplink reference signal transmission are to be muted. At 510, the method comprises receiving, from the user equipment, the one or more PUSCH transmissions and one or more uplink reference signal transmissions.

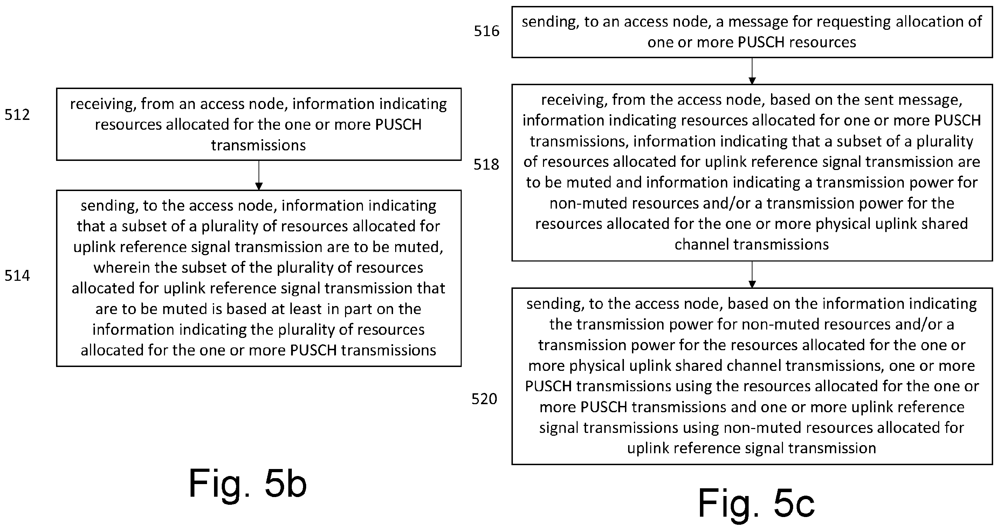

Reference is made to FIG. 5b, which shows a method performed by a first network function (e.g., a location management function, LMF) according to some examples.

At 512 the method comprises receiving, from an access node, information indicating resources allocated for the one or more PUSCH transmissions. At 514 the method comprises sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

Reference is made to FIG. 5c, which shows a method performed by a user equipment according to some examples.

At 516 the method comprises sending, to an access node, a message for requesting allocation of one or more PUSCH resources. At 518 the method comprises receiving, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions. At 520 the method comprises sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

As explained above, in some examples the UE may transmit an UL reference signal to the access node for UE localization and sensing. The UL reference signal may comprise a SRS.

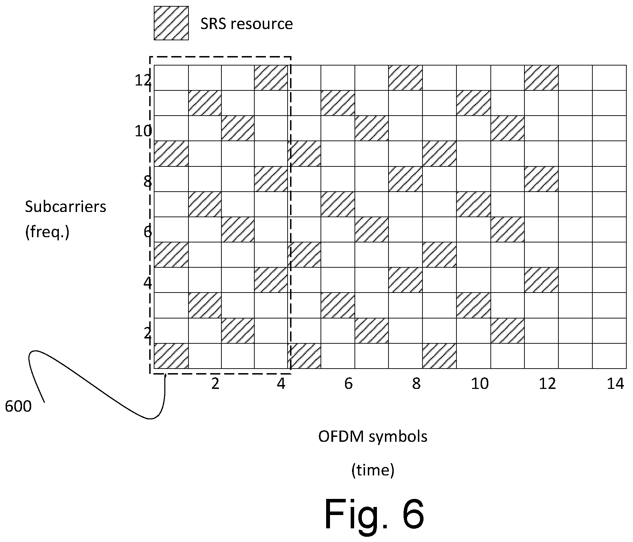

FIG. 6 shows an example SRS resource block. The resource block comprises a plurality of resources or resource elements (REs) distributed across a plurality of subcarriers (having different frequencies) and different orthogonal frequency-division multiplexing (OFDM) symbol slots (having different times). In the example of FIG. 6, 12 different subcarriers and 14 OFDM symbol slots are shown. In some examples, more or fewer subcarriers and/or OFDM symbol slots may be used.

In some examples the SRS may be confined to certain resources within the resource block. In some examples the SRS may have a periodic distribution within the resource block. For example, as shown in FIG. 6, the SRS may be confined to the first 12 OFDM symbols, and may have a periodicity (which may also be referred to as a comb size) of 4 - that is to say for each subcarrier, the SRS is transmitted on every $4^{th}$ resource in time (i.e. every $4^{th}$ OFDM symbol slot). It should be understood that different SRS configurations other than the specific example shown in FIG. 6 may be used in other examples.

As can be seen from FIG. 6, depending on the configuration, the SRS waveform can be sparse in the frequency and time domains. However, in the frequency (subcarrier) domain, if multiple OFDM symbols are considered together, the SRS waveform may cover the whole frequency bandwidth. Similarly, if multiple subcarriers are considered together, the SRS waveform may cover the total time duration (OFDM symbol slots).

Considering the frequency resources as an example, if the first 4 OFDM symbols are considered, as indicated by 600, the SRS waveform covers the whole bandwidth of the resource block.

Similarly to the SRS, PUSCH resources may also be defined in a resource block comprising a plurality of resources or REs distributed in the time and frequency domains. PUSCH data may not have the same structure as SRS - for example PUSCH resources may be non-contiguous in time and/or frequency domains, and may be either sparse or filled depending on the PUSCH loading. There may be several different PUSCH resource blocks, and each block may have a different resource allocation.

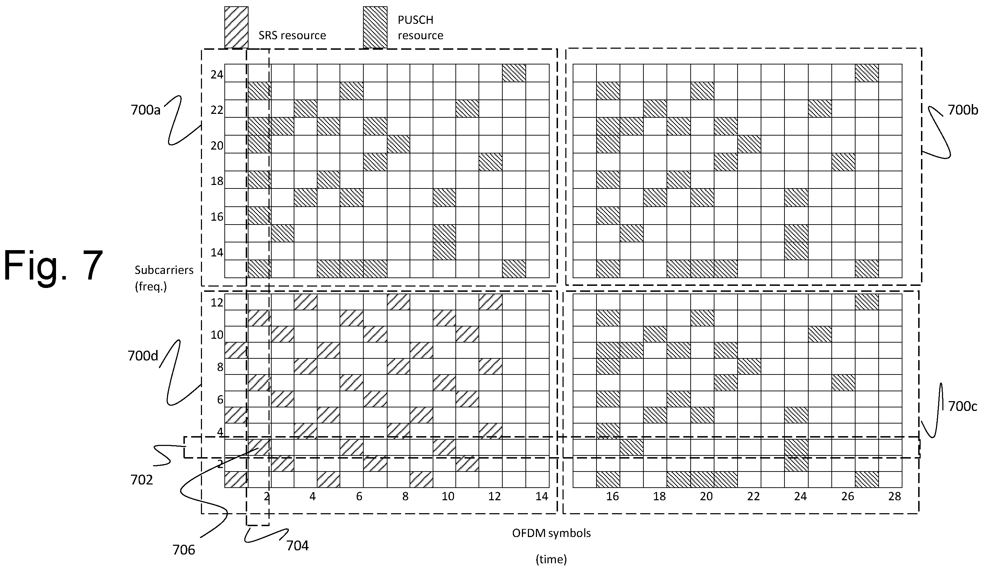

FIG. 7 shows an example resource grid, where there are three different resource blocks 700a, 700b, 700c comprising resources allocated for PUSCH transmissions and one resource block 700d comprising resources allocated for SRS transmissions. Resources allocated for PUSCH transmissions in block 700c have the same frequency as resources allocated for SRS in block 700d. Similarly, resources allocated for PUSCH transmissions in block 700a have the same times as resources allocated for SRS in block 700d.

The subset of SRS resources having the same frequency as resources allocated for PUSCH may be denoted by $\theta\_f$. For example, block 702 shows a subset of SRS resources and PUSCH resources that have the same frequency.

Similarly, the SRS resources having the same times as resources allocated for PUSCH may be denoted by $\theta\_t$. For example, block 704 shows a subset of SRS resources and PUSCH resources that have the same time (OFDM symbol slot).

Hence, the subset of SRS resources belonging to the intersection of those two sets, i.e., $\theta = \theta\_f \cap \theta\_t$, may have the same time and frequency resources as PUSCH.

When both PUSCH and SRS are simultaneously used for UE localization and sensing, a subset of the resources allocated for SRS transmission may be muted without decreasing the resources used, as the total bandwidth and time duration of both PUSCH and SRS are used for the processing. A subcarrier frequency and/or transmission time interval of the subset of the plurality of resources allocated for SRS transmission corresponds to a subcarrier frequency and/or transmission time interval of the resources allocated for the one or more PUSCH transmissions. For example, SRS resources in $\theta$ can be muted without reducing the total bandwidth and time duration.

Returning to the example of FIG. 7, resource 706 allocated for SRS has the same frequency and time slot as resources allocated for PUSCH, and therefore resource 706 may be muted. While not shown in FIG. 7, it should be understood that other resources allocated for SRS shown in FIG. 7 may also be muted based on this principle.

In some examples, by muting a subset of the resources allocated for SRS, the energy needed for the SRS waveform can be reduced, thereby improving the energy efficiency of the UE localization and sensing process. In some examples the gain in energy achieved by muting the subset of resources allocated for SRS may be re-allocated to PUSCH and/or non-muted SRS resources to increase the transmission power when compared to before the muting. This may improve the signal to noise (SNR) ratio of the transmitted PUSCH and/or SRS, thereby improving the UE localization and sensing performance.

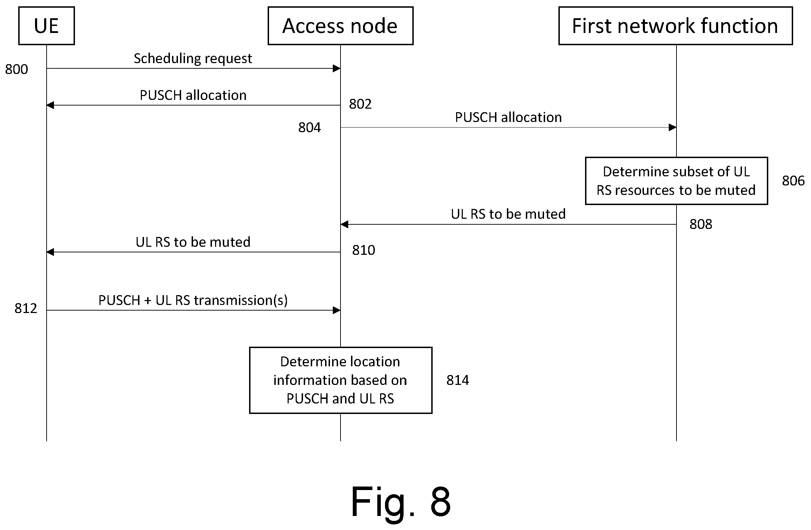

Reference is made to FIG. 8, which shows a method according to some examples.

At 800, a UE may send, to an access node, a message for requesting allocation of one or more PUSCH resources. The message for requesting allocation of the one or more PUSCH resources may comprises one of: a scheduling request; a buffer status report; or radio resource control signalling.

At 802, based on the received message, the access node may send, to the UE, information indicating resources allocated for PUSCH transmission. For example the access node may allocate the resources for PUSCH transmission based on the received message, and then send the information indicating the resources allocated for PUSCH transmission to the UE.

At 804, based on the received message, the access node may send, to a first network function, information indicating the resources allocated for PUSCH transmission. The first network function may be any network function suitable for performing the functions attributed to the first network function herein. For example the first network function may be a location management function (LMF) or a sensing management function.

At 806, the first network function may determine, based at least on the information indicating the resources allocated for PUSCH transmission, a subset of a plurality of resources allocated for uplink reference signal transmission that are to be muted. The uplink reference signal may comprise a SRS.

As explained above, the resources that are allocated for the one or more PUSCH transmissions and the resources that are allocated for uplink reference signal transmission may comprise a plurality of resources or resource elements. Each resource or resource element may be associated with a subcarrier frequency and transmission time interval.

A subcarrier frequency and/or transmission time interval of the subset of the plurality of resources allocated for uplink reference signal transmission may correspond to a subcarrier frequency and/or transmission time interval of resources allocated for one or more PUSCH transmissions. For example:

The subset of the plurality of resources allocated for uplink reference signal transmission may have the same frequency as resources allocated for PUSCH (e.g., $\theta\_f$ described previously); or

The subset of the plurality of resources allocated for uplink reference signal transmission may have the same times as resources allocated for PUSCH (e.g., $\theta\_t$ described previously); or

The subset of the plurality of resources allocated for uplink reference signal transmission may have the same frequency and times as the resources allocated for PUSCH (e.g., $\theta = \theta\_f \cap \theta\_t$ described previously).

In some examples the first network function may determine the plurality of resources allocated for uplink reference signal transmission based on the information indicating the resources allocated for PUSCH transmission. For example the first network function may determine uplink reference signal parameters, such as a comb size and/or number of OFDM symbols used in the uplink reference signal resource block.

In some examples the first network function may calculate, based on based on the information indicating the resources allocated for PUSCH transmission, an average number of PUSCH resources in time and frequency domains. The first network function may then determine the uplink reference signal parameters (e.g., comb size and/or number of OFDM symbols used in the uplink reference signal resource block) based on the average number of PUSCH resources in time and frequency domains.

For example, there may be three possible comb sizes: 2, 4, and 8; and the number of OFDM symbols in the uplink reference signal may be {1, 2, 4, 8, 10, 12, 14}. The first network function may determine the uplink reference signal parameters (which in this example correspond to the comb size and number of OFDM symbols) as shown below in Tables 1 and 2, where $\alpha_f$ and $\alpha_t$ denote the calculated averages across frequency and time domains for one resource block of PUSCH.

Table 1: comb size selection

| $\alpha_f$ value | UL reference signal comb size |
|---|---|
| $8 \leq \alpha_f \leq 12$ | 8 |
| $4 \leq \alpha_f < 8$ | 4 |
| $0 \leq \alpha_f < 4$ | 2 |

Table 2: Number of OFDM symbols selection

| $\alpha_t$ value | Number of OFDM symbols in UL reference signal |
|---|---|
| $12 \leq \alpha_t \leq 14$ | 1 |
| $10 \leq \alpha_t < 12$ | 2 |
| $8 \leq \alpha_t < 10$ | 4 |

(continued)

| $\alpha_t$ value | Number of OFDM symbols in UL reference signal |
|---|---|
| $6 \leq \alpha_t < 8$ | 8 |
| $4 \leq \alpha_t < 6$ | 10 |
| $2 \leq \alpha_t < 4$ | 12 |
| $0 \leq \alpha_t < 2$ | 14 |

As can be seen from the above example, when there are many PUSCH resources in either time or frequency domain, the amount of UL reference signal resources may be decreased.

Having determined the UL reference signal parameters (e.g., comb size and/or number of OFDM symbols), the first network function may determine the subset of a plurality of resources allocated for uplink reference signal transmission that are to be muted as described previously.

At 808, the first network function may send, to the access node, information indicating that the subset of the plurality of resources allocated for uplink reference signal transmission are to be muted.

As explained previously, by muting the subset of the plurality of resources allocated for uplink reference signal transmission, the energy/power needed to transmit the uplink reference signal may be reduced, thereby improving the energy efficiency of the procedure.

However, in some examples, the energy/power saved by muting the subset of the plurality of resources allocated for uplink reference signal transmission may be re-allocated to non-muted uplink reference signal resources and/or PUSCH resources. That is to say, an average of the transmission power of the non-muted resources may be higher than an average of the transmission power of the resources allocated for uplink reference signal transmission prior to muting the subset. Likewise, an average of the transmission power of the resources allocated for PUSCH transmission after muting the subset of the plurality of resources allocated for uplink reference signal transmission may be higher than an average of the transmission power of the resources allocated for PUSCH transmission prior to muting the subset of the plurality of resources allocated for uplink reference signal transmission. While this may reduce any energy saving benefits, the non-muted UL reference signal resources may have a higher transmission power, thereby increasing the SNR of the non-muted resources and/or PUSCH resources and improving the UE localization and sensing performance.

To enable the energy/power reallocation, in some examples the access node may send, to the user equipment, information indicating a transmission power for non-muted resources of the plurality of resources allocated for uplink reference signal transmission and/or a transmission power for the resources allocated for the one or more PUSCH transmissions. In some examples the information indicating that the subset of the plurality of resources allocated for uplink reference signal transmission are to be muted (sent by the first network function to the access node at 808) may further comprise the information indicating the transmission power for the non-muted resources and/or the transmission power of the resources allocated for PUSCH transmission. In other examples the information indicating the transmission power for the non-muted resources and/or the transmission power of the resources allocated for PUSCH transmission may be sent as a separate message from the message sent at 808. At 810 the access node may send, to the user equipment, information indicating that the subset of the plurality of resources allocated for uplink reference signal transmission are to be muted. In some examples the information indicating that the subset of the plurality of resources allocated for uplink reference signal transmission are to be muted may further comprise information indicating the transmission power for the non-muted resources and/or a transmission power of the resources allocated for PUSCH transmission (if received from the first access node at 808).

At 812, the user equipment may send, to the access node, one or more PUSCH transmissions and one or more UL reference signal transmissions based on the information received at 802 and 810 respectively.

Sending the one or more UL reference signal transmissions may comprise sending the one or more uplink reference signals using non-muted resources of the plurality of resources allocated for uplink reference signal transmission. A transmission power of the non-muted resources and/or a transmission power of the resources allocated for PUSCH transmission may be based on the information indicating the transmission power for the non-muted resources (if received at 810).

At 814, the access node may determine, based on the received one or more PUSCH transmissions and the one or more uplink reference signal transmissions, location information associated with a user equipment. The location information may for example comprise a range of the UE and/or a velocity of the UE.

The received (RX) resource grid at the access node may be a combination of the uplink reference signal resources and PUSCH resources. Since the uplink reference signal resources and PUSCH resources are orthogonal in time and frequency, the RX resource grid may be written as:

$$Y = Y_{RS} + Y_{PUSCH}, (1)$$

where $\boldsymbol{Y}$, $\boldsymbol{Y_{RS}}$, and $\boldsymbol{Y_{PUSCH}}$ are the RX resource grid, RX uplink reference signal resource grid, and RX PUSCH resource grid, all containing the frequency-domain symbols.

The access node may separate the RX uplink reference signal resource grid and PUSCH resource grid.

Since the access node knows the locations of the uplink reference signal resources (both muted and non-muted), the access node is aware of the OFDM symbols and subcarriers where uplink reference signal resources reside, thereby knowing $\boldsymbol{Y_{RS}}$.

Similarly, the access node also knows the OFDM symbols and subcarriers corresponding to the PUSCH resources. Hence, it also knows $\boldsymbol{Y_{PUSCH}}$.

The corresponding TX resource grids may similarly be denoted by $\boldsymbol{X}$, $\boldsymbol{X_{RS}}$, and $\boldsymbol{X_{PUSCH}}$. Due to orthogonality, the relation between the resource grids can also be written as:

$$X = X_{RS} + X_{PUSCH}. (2)$$

The access node knows the TX uplink reference signal sequence and knows the muted uplink reference signal resources (and the power re-allocation if sent at 810). Hence, the access node can estimate the TX uplink reference signal waveform $\hat{\boldsymbol{X}}_{RS}$, which could be different to that of $\boldsymbol{X_{RS}}$ due to noise or other imperfections.

The access node may determine the TX PUSCH, i.e., $\hat{\boldsymbol{X}}_{PUSCH}$, based on mechanisms known in the art. For example, the TX PUSCH may be determined using direct or indirect sensing methods, such as described in J. A. Zhang et al., "An Overview of Signal Processing Techniques for Joint Communication and Radar Sensing," in IEEE Journal of Selected Topics in Signal Processing, vol. 15, no. 6, pp. 1295-1315, Nov. 2021.

Combining the uplink reference signal and PUSCH, the TX resource grid $\boldsymbol{X}$ can then be estimated as $\hat{\boldsymbol{X}}$. Using equation (2), it can be written as:

$$\hat{X} = \hat{X}_{RS} + \hat{X}_{PUSCH}. (3)$$

Then, the channel between the access node and the UE can be estimated as:

$$H_{gNB-UE} = Y_{RS} .* conj(\hat{X}_{RS}) + Y_{PUSCH} .* conj(\hat{X}_{PUSCH}), (4)$$

where (.*) represents element-wise multiplication of the different REs while *conj*(.) denotes the conjugate operation. The estimated channel may be expressed as a matrix of REs in frequency and time, which may be used to determine the location information. For example, the frequency-axis may be converted to range values based on range = speed/frequency (where speed is assumed to be the speed of light), and the time axis may be converted to velocity through a similar process.

While in the example of FIG. 8 the access node sending the information indicating resources allocated for PUSCH transmission (at 802) is shown as being separate from sending the information indicating that the subset of the plurality of resources allocated for uplink reference signal transmission are to be muted (at 810), in some examples steps 802 and 810 may be combined or performed in a different order than that shown in FIG. 8.

Examples have been described whereby uplink reference signal transmissions (e.g., SRS) and PUSCH transmissions may simultaneously be used for UE localization and sensing. By utilizing both uplink reference signals and PUSCH, in some examples a subset of resources allocated for uplink reference signal transmission may be muted without reducing the accuracy of the UE localization and sensing. This may improve the energy efficiency of the UE localization and sensing process. Alternatively, the power saved by muting the subset of the resources allocated for uplink reference signal transmission may be re-allocated to the uplink signal(s) (e.g., non-muted uplink reference signal resources and/or resources allocated to PUSCH), which may improve the signal-to-noise ratio of the uplink reference signal and thereby improve the UE localization and sensing performance.

In some examples there is provided an access node comprising means for: receiving, from a user equipment, a message for requesting allocation of one or more physical uplink shared channel (PUSCH) resources; based on the received message, sending, to the user equipment, information indicating resources allocated for one or more PUSCH transmissions; based on the received message, sending, to a first network function, information indicating resources that are allocated for one or more PUSCH transmissions; receiving, from the first network function, based on the information indicating the resources that are allocated for the one or more PUSCH transmissions, information indicating that a subset of a plurality of resources allocated for uplink reference signal transmission are to be muted; sending, to a user equipment, the information indicating that the subset of a plurality of resources allocated for uplink reference signal transmission are to be muted; and receiving, from the user equipment, the one or more PUSCH transmissions and one or more uplink reference signal transmissions.

In some examples there is provided an access node comprising at least one processor and at least one memory storing instructions that, when executed by the at least one processor, cause the access node at least to: receive, from a user equipment, a message for requesting allocation of one or more physical uplink shared channel (PUSCH) resources; based on the received message, send, to the user equipment, information indicating resources allocated for one or more PUSCH transmissions; based on the received message, send, to a first network function, information indicating resources that are allocated for one or more PUSCH transmissions; receive, from the first network function, based on the information indicating the resources that are allocated for the one or more PUSCH transmissions, information indicating that a subset of a plurality of resources allocated for uplink reference signal transmission are to be muted; send, to a user equipment, the information indicating that the subset of a plurality of resources allocated for uplink reference signal transmission are to be muted; and receive, from the user equipment, the one or more PUSCH transmissions and one or more uplink reference signal transmissions.

In some examples there is provided an apparatus comprising means for providing a first network function configured to perform: receiving, from an access node, information indicating resources allocated for the one or more PUSCH transmissions; and sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

In some examples there is provided an apparatus for providing a first network function, the apparatus comprising at least one processor and at least one memory storing instructions that, when executed by the at least one processor, cause the apparatus at least to: receive, from an access node, information indicating resources allocated for the one or more PUSCH transmissions; and send, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions.

In some examples there is provided a user equipment comprising means for: sending, to an access node, a message for requesting allocation of one or more PUSCH resources; receiving, from the access node, based on the sent message, information indicating resources allocated for one or more PUSCH transmissions, information indicating that a subset of a plurality of resources allocated for uplink reference signal transmission are to be muted, and information indicating a transmission power for non-muted resources and/or a transmission power for the resources allocated for the one or more physical uplink shared channel transmissions; and sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

In some examples there is provided a user equipment comprising at least one processor and at least one memory storing instructions that, when executed by the at least one processor, cause the user equipment at least to: send, to an access node, a message for requesting allocation of one or more PUSCH resources; receive, from the access node, based on the sent message, information indicating resources allocated for one or more PUSCH transmissions, information indicating that a subset of a plurality of resources allocated for uplink reference signal transmission are to be muted, and information indicating a transmission power for non-muted resources and/or a transmission power for the resources allocated for the one or more physical uplink shared channel transmissions; and send, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission.

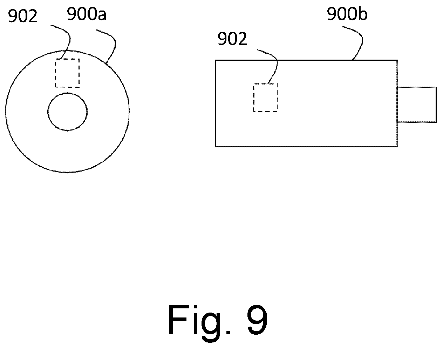

FIG. 9 shows a schematic representation of non-volatile memory media 900a (e.g., computer disc (CD) or digital versatile disc (DVD)) and 900b (e.g. universal serial bus (USB) memory stick) storing instructions and/or parameters 902 which when executed by a processor allow the processor to perform one or more of the steps of the method of FIG. 5a, 5b and 5c.

It is understood that references in the above to various network functions (e.g., to an AMF, an SMF, TNF etc.) may be implemented by apparatus that perform at least some of the functionality associated with those network functions. Further, an apparatus configured to implement a network function may further be configured to implement a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some example embodiments have been described in relation to 5G networks, similar example embodiments can be applied in relation to other networks and communication systems. Therefore, although certain example embodiments were described above by way of example with reference to certain example architectures for wireless networks, technologies and standards, further example embodiments may be applied to any other suitable forms of communication systems than those illustrated and described herein.

It is also noted herein that there are several variations and modifications which may be made to the various example embodiments described herein without departing from the scope of this disclosure.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. As used herein, the expression "and/or" includes any and all combinations of the listed terms, including at least any one of the elements, at least any two or more of the elements, or at least all of the elements.

As used herein, the term "or" refers to a non-exclusive "or" unless otherwise indicated (e.g., use of "or else" or "or in the alternative").

As used herein, unless stated explicitly, performing a step "in response to A" does not indicate that the step is performed immediately after "A" occurs and one or more intervening steps may be included. Analogously, performing a step or functionality "based on A" does not indicate that the step or functionality is performed solely based on "A" as one or more additional conditions may be included.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting and illustrative examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that utilizes software (e.g., firmware) for operation, but the software may not be present when it is not utilized for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the FIGs. may represent program steps, or interconnected logic circuits, blocks and functions, or a combination of program steps and logic circuits, blocks and functions. The software may be stored on such physical media as memory chips, or memory blocks implemented within the processor, magnetic media, such as hard disk or floppy disks, and optical media, such as DVD and the data variants thereof, CD. The physical media is a non-transitory media.

The term "non-transitory," as used herein, is a limitation of the medium itself (e.g., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components, such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of this disclosure, when read in conjunction with the drawings and the claims. However, all such and similar modifications of the teachings will still fall within the various example embodiments of this disclosure. By way of non-limiting and illustrative example, there is a further example embodiment comprising a combination of one or more example embodiments with any of the other example embodiments previously discussed.

**Claims**

1. A user equipment (100, 300) comprising at least one processor (301) and at least one memory (302) storing instructions that, when executed by the at least one processor, cause the user equipment at least to:

   send, to an access node (101), a message for requesting allocation of one or more physical uplink shared channel resources (516);
   receive, from the access node, based on the sent message, information indicating resources allocated for one or more physical uplink shared channel transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions (518); and
   send, to the access node, based on the information indicating the transmission power for non-muted resources and/or a transmission power for the resources allocated for the one or more physical uplink shared channel transmissions, one or more physical uplink shared channel transmissions using the resources allocated for the one or more physical uplink shared channel transmissions and one or more uplink reference signal transmissions using non-muted resources allocated for uplink reference signal transmission (520).

2. The user equipment of claim 1, wherein the resources allocated for the one or more physical uplink shared channel transmissions and the resources allocated for uplink reference signal transmission comprise a plurality of resource elements, each resource element being associated with a subcarrier frequency and transmission time interval.

3. The user equipment of claim 2, wherein a subcarrier frequency and/or transmission time interval of the subset of the plurality of resources allocated for uplink reference signal transmission corresponds to a subcarrier frequency and/or transmission time interval of the resources allocated for the one or more physical uplink shared channel transmissions.

4. The user equipment of any of claims 1 to 3, wherein the information indicating that the subset of the plurality of resources allocated for uplink reference signal transmission are to be muted further comprises information indicating non-muted resources of the plurality of resources allocated for uplink reference signal transmission.

5. The user equipment of any preceding claim, wherein:

   an average of the transmission power of the non-muted resources is higher than an average of the transmission power of the resources allocated for uplink reference signal transmission prior to muting the subset; and/or an average of the transmission power of the resources allocated for physical uplink shared channel transmission after muting the subset of the plurality of resources allocated for uplink reference signal transmission is higher than an average of the transmission power of the resources allocated for physical uplink shared channel transmission prior to muting the subset of the plurality of resources allocated for uplink reference signal transmission.

6. The user equipment of any of claims 1 to 5, wherein the message for requesting allocation of the one or more physical uplink shared channel resources comprises one of:

a scheduling request;
a buffer status report; or
radio resource control signalling.

7. A method performed by a user equipment, the method comprising:

sending, to an access node, a message for requesting allocation of one or more physical uplink shared channel resources;
receiving, from the access node, based on the sent message, information indicating resources allocated for one or more physical uplink shared channel transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and
sending, to the access node, based on the information indicating the transmission power for non-muted resources and/or a transmission power for the resources allocated for the one or more physical uplink shared channel transmissions, one or more physical uplink shared channel transmissions using the resources allocated for the one or more physical uplink shared channel transmissions and one or more uplink reference signal transmissions using non-muted resources allocated for uplink reference signal transmission.

8. The method of claim 7, wherein the resources allocated for the one or more transmissions and the resources allocated for uplink reference signal transmission comprise a plurality of resource elements, each resource element being associated with a subcarrier frequency and transmission time interval.

9. The method of claim 8, wherein a subcarrier frequency and/or transmission time interval of the subset of the plurality of resources allocated for uplink reference signal transmission corresponds to a subcarrier frequency and/or transmission time interval of the resources allocated for the one or more physical uplink shared channel physical uplink shared channel transmissions.

10. The method of any of claims 7 to 9, wherein the information indicating that the subset of the plurality of resources allocated for uplink reference signal transmission are to be muted further comprises information indicating non-muted resources of the plurality of resources allocated for uplink reference signal transmission.

11. The method of any of claims 7 to 10, wherein:

an average of the transmission power of the non-muted resources is higher than an average of the transmission power of the resources allocated for uplink reference signal transmission prior to muting the subset; and/or
an average of the transmission power of the resources allocated for transmission after muting the subset of the plurality of resources allocated for uplink reference signal transmission is higher than an average of the transmission power of the resources allocated for physical uplink shared channel transmission prior to muting the subset of the plurality of resources allocated for uplink reference signal transmission.

12. The method of any of claims 7 to 11, wherein the message for requesting allocation of the one or more physical uplink shared channel resources comprises one of:

a scheduling request;
a buffer status report; or
radio resource control signalling.

**13.** A computer readable medium comprising instructions which, when executed by a user equipment, cause the user equipment to perform at least the following:

sending, to an access node, a message for requesting allocation of one or more physical uplink shared channel resources;

receiving, from the access node, based on the sent message, information indicating resources allocated for one or more physical uplink shared channel transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions; and

sending, to the access node, based on the information indicating the transmission power for non-muted resources and/or a transmission power for the resources allocated for the one or more physical uplink shared channel transmissions, one or more physical uplink shared channel transmissions using the resources allocated for the one or more physical uplink shared channel transmissions and one or more uplink reference signal transmissions using non-muted resources allocated for uplink reference signal transmission.

Fig. 1

Fig. 2

Fig. 3

Fig. 4

EP 4 641 964 A1

EP 4 641 964 A1

| 500 | receiving, from a user equipment, a message for requesting allocation of one or more PUSCH resources |
|---|---|
| 502 | based on the received message, sending, to the user equipment, information indicating resources allocated for one or more PUSCH transmissions |
| 504 | based on the received message, sending, to a first network function, information indicating resources that are allocated for one or more PUSCH transmissions |
| 506 | receiving, from the first network function, based on the information indicating the resources that are allocated for the one or more PUSCH transmissions, information indicating that a subset of a plurality of resources allocated for uplink reference signal transmission are to be muted |
| 508 | sending, to a user equipment, the information indicating that the subset of a plurality of resources allocated for uplink reference signal transmission are to be muted |
| 510 | comprises receiving, from the user equipment, the one or more PUSCH transmissions and one or more uplink reference signal transmissions |

# Fig. 5a

512　　receiving, from an access node, information indicating resources allocated for the one or more PUSCH transmissions

514　　sending, to the access node, information indicating that a subset of a plurality of resources allocated for uplink reference signal transmission are to be muted, wherein the subset of the plurality of resources allocated for uplink reference signal transmission that are to be muted is based at least in part on the information indicating the plurality of resources allocated for the one or more PUSCH transmissions

## Fig. 5b

516　　sending, to an access node, a message for requesting allocation of one or more PUSCH resources

518　　receiving, from the access node, based on the sent message, information indicating resources allocated for one or more PUSCH transmissions, information indicating that a subset of a plurality of resources allocated for uplink reference signal transmission are to be muted and information indicating a transmission power for non-muted resources and/or a transmission power for the resources allocated for the one or more physical uplink shared channel transmissions

520　　sending, to the access node, based on the information indicating the transmission power for non-muted resources and/or a transmission power for the resources allocated for the one or more physical uplink shared channel transmissions, one or more PUSCH transmissions using the resources allocated for the one or more PUSCH transmissions and one or more uplink reference signal transmissions using non-muted resources allocated for uplink reference signal transmission

## Fig. 5c

EP 4 641 964 A1

Fig. 6

Fig. 7

Fig. 8

Fig. 9

Europäisches
Patentamt
European
Patent Office
Office européen
des brevets

# EUROPEAN SEARCH REPORT

**Application Number**

EP 25 17 0188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 879 743 A1 (IDAC HOLDINGS INC [US]) 15 September 2021 (2021-09-15) <br> * paragraph [0080] * <br> * paragraph [0115] - paragraph [0116] * <br> * paragraph [0164] - paragraph [0172] * <br> * paragraph [0214] * <br> * paragraph [0267] * <br> * paragraph [0350] - paragraph [0351] * <br> * paragraph [0073] * <br> - - - - - | 1-13 | INV. <br> H04L5/00 |
| X | US 2012/202554 A1 (SEO HAN BYUL [KR] ET AL) 9 August 2012 (2012-08-09) <br> * paragraph [0052] * <br> * paragraph [0084] - paragraph [0085] * <br> * paragraph [0091] * <br> * paragraph [0100] - paragraph [0107] * <br> - - - - - | 1-13 | |
| X | WO 2023/152341 A2 (FRAUNHOFER GES FORSCHUNG [DE]) 17 August 2023 (2023-08-17) <br> * page 11, line 33 - page 12, line 5 * <br> * page 15, line 28 - page 16, line 25 * <br> * page 23, line 31 - page 29, line 8 * <br> - - - - - | 1-13 | |

**TECHNICAL FIELDS SEARCHED (IPC)**

H04L

The present search report has been drawn up for all claims

| Place of search | Date of completion of the search | Examiner |
|---|---|---|
| The Hague | 18 September 2025 | Reilly, Declan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 0188

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | | Publication date | Patent family member(s) | | Publication date |
|---|---|---|---|---|---|
| EP 3879743 | A1 | 15-09-2021 | CN | 106063178 A | 26-10-2016 |
| | | | EP | 3085002 A1 | 26-10-2016 |
| | | | EP | 3879743 A1 | 15-09-2021 |
| | | | JP | 6721506 B2 | 15-07-2020 |
| | | | JP | 2017504259 A | 02-02-2017 |
| | | | KR | 20160099095 A | 19-08-2016 |
| | | | US | 2016330011 A1 | 10-11-2016 |
| | | | US | 2019158263 A1 | 23-05-2019 |
| | | | US | 2021091918 A1 | 25-03-2021 |
| | | | US | 2023353336 A1 | 02-11-2023 |
| | | | US | 2025202674 A1 | 19-06-2025 |
| | | | WO | 2015094914 A1 | 25-06-2015 |
| US 2012202554 | A1 | 09-08-2012 | KR | 20120112369 A | 11-10-2012 |
| | | | US | 2012202554 A1 | 09-08-2012 |
| | | | WO | 2011052965 A2 | 05-05-2011 |
| WO 2023152341 | A2 | 17-08-2023 | CN | 118985113 A | 19-11-2024 |
| | | | EP | 4476859 A2 | 18-12-2024 |
| | | | US | 2025047442 A1 | 06-02-2025 |
| | | | WO | 2023152341 A2 | 17-08-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. A. ZHANG et al.** An Overview of Signal Processing Techniques for Joint Communication and Radar Sensing. *IEEE Journal of Selected Topics in Signal Processing*, November 2021, vol. 15 (6), 1295-1315